(19) Europäisches Patentamt
European Patent Office
Office européen des brevets

(11) **EP 0 788 017 B1**

(12) **FASCICULE DE BREVET EUROPEEN**

(45) Date de publication et mention
de la délivrance du brevet:
**13.09.2006 Bulletin 2006/37**

(51) Int Cl.:
***G02F 1/35*** (2006.01)

(21) Numéro de dépôt: **97400183.6**

(22) Date de dépôt: **27.01.1997**

(54) **Miroir optique non linéaire en boucle (NOLM) indépendant de la polarisation**

Polarisationsunabhängiger nichtlinearer optischer Ringspiegel (NOLM)

Polarization independent nonlinear optical loop mirror (NOLM)

(84) Etats contractants désignés:
**AT BE CH DE ES FI GB IT LI NL SE**

(30) Priorité: **30.01.1996 FR 9601083**

(43) Date de publication de la demande:
**06.08.1997 Bulletin 1997/32**

(73) Titulaire: **Alcatel**
**75008 Paris (FR)**

(72) Inventeur: **Bigo, Sébastien**
**91120 Palaiseau (FR)**

(74) Mandataire: **Smith, Bradford Lee et al**
**COMPAGNIE FINANCIERE ALCATEL**
**Département Propriété Industrielle**
**54, rue La Boétie**
**75008 Paris (FR)**

(56) Documents cités:
**US-A- 5 377 284**

• **OFC '94. OPTICAL FIBER COMMUNICATION. VOL.4. 1994 TECHNICAL DIGEST SERIES. CONFERENCE EDITION (IEEE CAT. NO. 94CH3422-3), 1994 CONFERENCE ON OPTICAL FIBER COMMUNICATION - OFC'94, SAN JOSE, CA, USA, 20-25 FEB. 1994, ISBN 1-55752-321-5, 1994, WASHINGTON, DC, USA, OPT. SOC. AMERICA, USA, pages 310-311, XP000570117 SANDEL D ET AL: "Polarization-independent regenerator with nonlinear optoelectronic phase-locked loop"**

• **ELECTRONICS LETTERS, 3 AUG. 1995, UK, vol. 31, no. 16, ISSN 0013-5194, pages 1380-1381, XP000524999 MAHGEREFTEH D ET AL: "Bandwidth and bit error rate performance of walk-off compensating 1.5/1.3 mu m wavelength converter"**

• **IEEE PHOTONICS TECHNOLOGY LETTERS, vol. 4, no. 3, 1 Mars 1992, pages 260-263, XP000264919 WHITAKER N A: "POLARIZATION-INDEPENDENT ALL-OPTICAL SWITCHING"**

• **LUCEK J K; SMITH K: "ALL-OPTICAL SIGNAL REGENERATOR" OPTICS LETTERS, vol. 18, no. 15, 1 août 1993 (1993-08-01), pages 1226-1228, XP000382933 WASHINGTON, DC, US**

• **FINLAYSON N; NAYAR B K; DORAN N J: "SWITCH INVERSION AND POLARIZATION SENSITIVITY OF THE NONLINEAR- OPTICAL LOOP MIRROR" OPTICS LETTERS, vol. 17, no. 2, 15 janvier 1992 (1992-01-15), pages 112-114, XP000247180 WASHINGTON, DC, US**

• **UCHIYAMA K; ET AL: "ULTRAFAST POLARISATION-INDEPENDENT ALL-OPTICAL SWITCHING USING A POLARISATION DIVERSITY SCHEME IN THE NONLINEAR OPTICAL LOOP MIRROR" ELECTRONICS LETTERS, vol. 28, no. 20, 24 septembre 1992 (1992-09-24), pages 1864-1866, XP000315907 Stevenage, UK**

• **UCHIYAMA K; MORIOKA T; SARUWATARI M: "POLARISATION-INDEPENDENT WAVELENGHT CONVERSION USING NONLINEAR OPTICAL LOOP MIRROR" ELECTRONICS LETTERS, vol. 31, no. 21, 12 octobre 1995 (1995-10-12), pages 1862-1863, XP000553344 STEVENAGE, GB**

**Description**

L'invention concerne le domaine de traitement de signaux optiques, qui circulent par exemple au sein d'un système de télécommunications optiques. Plus précisément, l'invention concerne un dispositif de miroir optique non linéaire (NOLM en anglais), qui peut être utilisé pour le routage, la commutation, ou la modulation de signaux optiques.

L'homme de l'art connaît de nombreuses réalisations et applications des NOLM dans des circuits photoniques tels des liaisons de télécommunications via fibre optique.

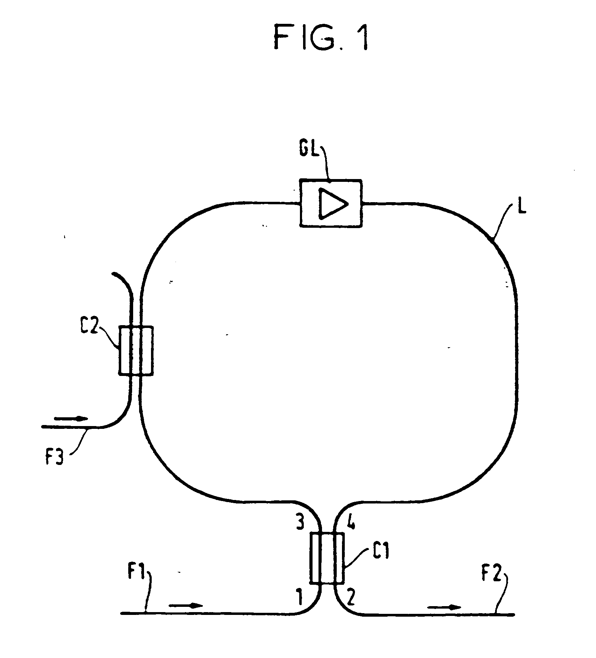

Un NOLM classique est montré sur la figure 1. De manière générale, un NOLM comprend une boucle de fibre optique L ; un premier coupleur optique C1 avec ses quatre portes 1, 2, 3, 4, ce coupleur C1 ayant un coefficient de couplage $\xi/(1-\xi)$ qui décrit le partage de puissance optique entre les différentes portes ; et un deuxième coupleur optique C2 pour injecter un premier signal de contrôle dans le NOLM via une première fibre optique de contrôle F3.

L'adjonction éventuelle d'un amplificateur optique GL dans la boucle peut conférer un gain positif à l'ensemble, ce qui en fait un miroir non linéaire amplificateur (NALM) ; ou bien un tel amplificateur peut compenser les pertes d'insertion pour conférer un gain d'unité à l'ensemble.

Le signal optique à commuter par le NOLM est introduit par la fibre d'entrée F1 à la porte 1 du coupleur C1. Décrivons tout d'abord le cas d'un coefficient de couplage $\xi/(1-\xi)$ du coupleur C1 de 50/50, en l'absence d'un signal de contrôle sur la fibre F3. Dans ce cas, 50 % de la puissance dudit signal optique se trouve sur la porte 4, tandis que l'autre 50 % se trouve sur la porte 3 du coupleur Cl, mais avec un déphasage relatif de n/2 radians (90°) entre les deux. Les deux signaux se propagent donc dans des sens opposés dans la boucle de fibre, qui aura une longueur de l'ordre de 5 à 10 kms. Puisque les chemins optiques des deux signaux sont identiques, les signaux arrivent sur les portes 3, 4 respectivement du coupleur C1, où ils interfèrent. Le coupleur C1 introduit encore un déphasage relatif de $\pm \pi/2$.

Puisque les deux signaux sont maintenant déphasés de $\pm\pi$ ou 0, il y a interférence destructive (déphasage de $\pm\pi$) pour l'onde résultante dirigée vers la porte 2 du coupleur Cl, donc il n'y a pas de transmission du signal vers la fibre de sortie F2. En revanche, l'interférence est constructive (déphasage 0) pour l'onde résultante dirigée vers la porte 1 du coupleur Cl, donc le signal présenté sur la porte 1 est totalement réfléchi par le miroir NOLM vers la porte 1 dans ce cas.

Maintenant considérons le cas où il y a un signal de contrôle présent sur la fibre optique de contrôle F3. Ce signal sera couplé dans la boucle du NOLM par le coupleur optique C2, et se propagera dans la boucle dans le sens des aiguilles d'une montre. Les ondes du signal qui circulent dans la boucle en sens contraire ne seront pas ou très peu affectées par la présence d'un signal de contrôle. En revanche, les ondes du signal qui se propagent dans le même sens dans la boucle seront perturbées. En effet, la fibre de la boucle L présente un effet non linéaire, qui change l'indice de réfraction de la fibre en fonction de la puissance optique, ou plus exactement en fonction de l'amplitude du champ électrique dans la fibre (effet Kerr). Les champs électriques des ondes circulant ensemble, dites "en co-propagation", se superposent de façon linéaire, donc l'intensité résultante du champ électrique est plus grande que celle des ondes se propageant dans l'autre sens dans la boucle L.

L'indice de réfraction effective de la boucle L vue par les ondes en co-propagation est différente de celle vue par les ondes en contre-propagation. Leurs vitesses de propagation sont donc différentes. Leurs temps d'arrivée sur le coupleur C1 sont différents, donc ces ondes n'interfèrent pas ou peu. La totalité de la puissance optique ou presque se trouve sur la porte 2 du coupleur Cl, véhiculée sur la fibre optique de sortie F2.

Ainsi, la présence d'un signal de contrôle sur la fibre de contrôle F3 est capable de commander la commutation du miroir optique non linéaire, qui sera transparent en présence du signal de contrôle, et qui sera réfléchissant en l'absence d'un signal de contrôle. La commutation peut être très rapide, de l'ordre de 100 GHz au moins. L'insertion d'un élément biréfringent dans la boucle du NOLM peut inverser les caractéristiques de commutation, pour rendre le miroir transparent en l'absence du signal de contrôle, et réfléchissant en présence d'un signal de contrôle.

Le NOLM tel que décrit jusqu'à maintenant est conforme à celui de l'art antérieur, qui peut être utilisé par exemple dans un dispositif de régénération de solitons par commutation à l'aide d'un NOLM d'un signal d'horloge, tel que décrit dans le document D1 = J. K. Lucek et K. Smith, (1993) "All optical signal regenerator", Opt. Lett. v.18, n°15, pp.1226-1228, 1 aug. 1993.

D'autres documents sont utiles pour une meilleure compréhension de la présente invention, et seront introduits brièvement avec une appréciation de leurs apports dans ce but.

D2 = N. Finlayson et al., (1992) "Switch inversion and polarization sensitivity of the nonlinear-optical loop mirror (NOLM)", Optics Lett., v.17, n°2, pp. 112-114, 15 jan. 1992. Ce document enseigne que le NOLM peut être agencé comme un commutateur qui n'est pas ou peu sensible à la polarisation du signal lumineux à commuter dans son régime linéaire, et que la biréfringence de la boucle peut contribuer aux instabilités constatées dans des lasers en anneau à blocage de modes.

Différentes configurations de NOLM sont décrites dans la littérature qui rendent le NOLM indépendant de la polarisation de l'une ou l'autre signal lumineux circulant dans le NOLM.

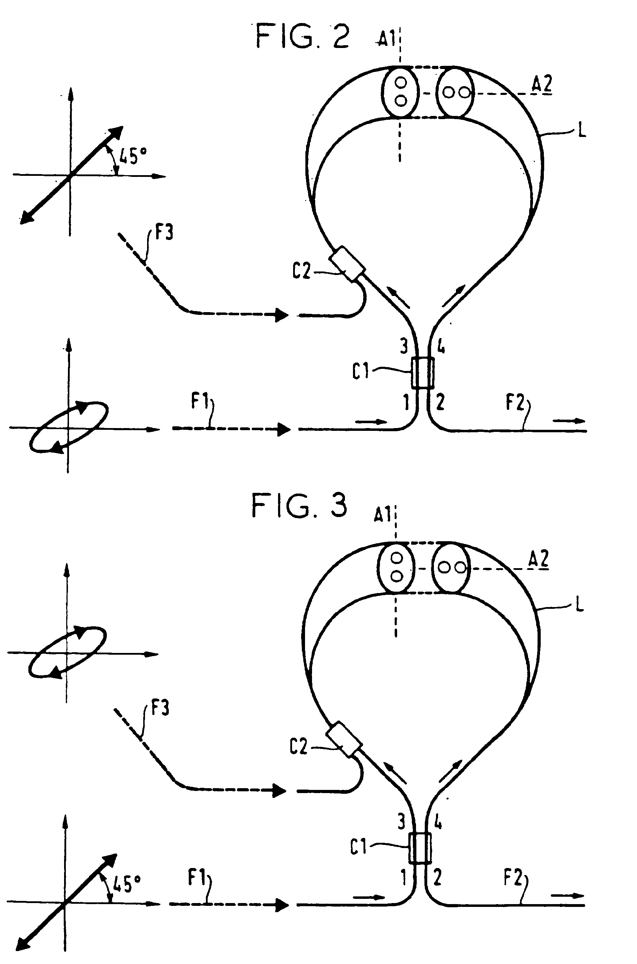

D3 = K. Uchiyama et al., (1992) "Ultrafast polarisation - independent all-optical switching using a polarisation diversity scheme in the nonlinear optical loop mirror (NOLM)", electron. lett., v.28, no.20, pp. 1864-1866, 24 sept. 1992. Ce document montre l'utilisation d'un NCLM comme un commutateur, qui est rendu insensible à la polarisation de la lumière du signal à commuter. Ceci est obtenu en utilisant une fibre à maintien de polarisation, que l'on aurait coupée et tournée à 90° au point médian de la boucle du NOLM. Le principe en est illustré en figure 2.

La boucle du NOLM est constituée par exemple d'une fibre à maintien de polarisation PANDA à deux trous. En effectuant une rotation de 90° entre l'axe A1 et l'axe A2 à mi-chemin de propagation, l'axe rapide (respectivement lent) de la partie gauche devient l'axe lent (respectivement rapide) de la partie droite de la boucle sur la figure 2. La fibre de la boucle (L) est dispersive en polarisation, c'est-à-dire que la vitesse de propagation de la lumière à l'intérieur de la fibre est différente pour une polarisation alignée avec l'axe rapide que pour une polarisation orthogonale à l'axe rapide de propagation, c'est-à-dire l'axe lent de la fibre. Il est nécessaire de s'affranchir de la dispersion en polarisation, ce que l'on réalise en utilisant deux longueurs équivalentes de fibre ayant une disposition mutuellement orthogonale des axes A1, A2 de maintien de polarisation, ce qui aura pour effet d'annuler la dispersion de polarisation sur la longueur de la boucle L.

Pour rendre le système indépendant de la polarisation du signal commuté, la polarisation du signal de contrôle qui est introduit dans la boucle L par le coupleur C2 sur la fibre d'entrée de contrôle F3 est injecté à 45° des deux axes orthogonaux A1, A2. De la même manière que précédemment, les effets de la dispersion de polarisation s'annulent.

D4 = Uchiyama et al. (1995), "Polarisation independant wavelength conversion using non linear optical loop mirror", Elect. Lett. 31 (21), p.1862, 12 october 1995 décrit un système de conversion de longueur d'onde d'un signal optique de polarisation indéterminée, appliqué à l'entrée contrôle d'un NOLM tel que décrit ci-dessus à l'aide de la figure 1. Pour rendre la performance de ce dispositif indépendante de la polarisation du signal optique à convertir en longueur d'onde, le NOLM est réalisé en fibre à maintien de polarisation comme en D3, et le signal d'horloge est injecté sur l'entrée du coupleur C1 avec une polarisation orientée à 45° par rapport aux axes neutres de la boucle du NOLM.

Le document considéré par la Demanderesse comme le document le plus proche de l'art antérieur est D5 = D. Sandel et al., (1994) :"Polarisation-independent regenerator with nonlinear optoelectronic phase-locked loop", Optical Fiber Conference proceedings 1994, paper FG2. Les caractéristiques du préambule de la revendication 1 sont déjà divulguées dans ce document. Ce document fait état d'une utilisation d'un NOLM ayant un coupleur 3x3 à son entrée principale. Dans une réalisation de l'invention, un tel coupleur 3x3 est utilisé pour obtenir une certaine relation de phase, telle qu'enseignée dans ce document. En effet, l'utilisation d'un coupleur 3x3, au lieu d'un coupleur 2x2, introduit un déphasage non symétrique dans la boucle du NOLM. La dégradation de rapport d'extinction en conséquence de la puissance moyen de pompage (ou le taux de remplissage de la boucle par des signaux d'horloge) vue par les signaux en contre propagation peut être éliminée par ce déphasage, si les différents paramètres sont choisis judicieusement.

Le NOLM de D5 comprend quatre tronçons (T1,T2,T3,T4) de fibre à maintien de polarisation, de longueurs optiques équivalentes. Ces quatre tronçons (T1,T2,T3,T4) sont reliés optiquement entre eux par trois épissures (E1,E2,E3) en trois endroits. Aux première et troisième épissures, les axes de maintien de polarisation de la fibre sont tournées de 90°. A la deuxième épissure, il est inséré dans la boucle un convertisseur de modes, qui comprend une fibre optique dispersive en polarisation dont la longueur est choisie en fonction des deux longueurs d'onde du signal et contrôle (longueurs d'onde respectivement de $\lambda_S$ et de $\lambda_C$).

Il s'agit d'une courte longueur de fibre à maintien de polarisation, dont les axes sont orientées à 45° des axes neutres des tronçons avoisinants (T2,T3). La longueur de cette fibre est choisie pour présenter une longueur de chemin optique telle qu'il existe un nombre entier n de longueurs de battement pour le signal (de longueur d'onde $\lambda_S$) et n $\pm$ 1\2 longueurs de battement pour la lumière de pompe (ici équivalent à la lumière de contrôle ayant la longueur d'onde de $\lambda_C$).

La réalisation de ce document D5 comporte des inconvénients que l'invention a pour but de pallier. En effet, ce dispositif pose de graves problèmes quant à sa réalisation pratique. Les caractéristiques de la fibre servant de convertisseur de modes doivent être connues très précisément, et sa longueur doit être ajustée avec une tolérance bien inférieure à une longueur de battement (quelques millimètres dans une fibre hautement biréfringente). Le convertisseur de modes doit être régulé en température. D'autre part, il est clair que la conversion de modes ne peut être réalisé que pour un couple de longueurs d'ondes ($\lambda_S$, $\lambda_C$) bien déterminé. De plus, la dispersion de polarisation n'est pas compensée et la conversion de modes seule, telle que présentée théoriquement dans le document D5, est insuffisante pour obtenir l'indépendance à la polarisation du contrôle.

D6 = US-A-5 377 284 au nom de H. Bülow décrit un interféromètre SAGNAC pour la commutation rapide d'un signal optique en réponse à l'application d'un signal optique de contrôle. L'interféromètre décrit agit de la même manière que le NOLM décrit ci-dessus, et son fonctionnement repose sur les mêmes principes physiques. Bülow décrit une manière de rendre le fonctionnement du commutateur indépendant de la polarisation du signal optique à commuter, en rendant le signal optique de contrôle quasi-dépolarisé.

Selon Bülow, l'impulsion du signal optique de contrôle peut contenir une pluralité d'états de polarisation distribués à l'intérieur de l'impulsion. Une autre solution proposée est l'utilisation de deux faisceaux de lumière dans l'impulsion de contrôle, ces deux faisceaux étant de polarisation linéaire avec leurs axes de polarisation mutuellement orthogonales.

D7 = Whitaker, N.A. et al. (1992) : "Polarisation-independent all-optical switching", IEEE Photon. Tech. Lett. 4 (3), pp.260-263, 3 March 1992. Dans cet article, l'auteur propose un NOLM indépendant de la polarisation du signal de contrôle en utilisant la dispersion de polarisation de la fibre du NOLM. Le signal et le contrôle (après passage dans un dispositif PDM -> TDM) se propageant chacun sur un des axes de polarisation (i.e. la polarisation du signal est imposée!) et se croisent N fois pour augmenter l'effet nonlinéaire (N tronçons de fibre à maintien de polarisation dont les axes sont tournés à 90° à chaque épissure.)

En outre Mahgerefteh et al. "Bandwidth and bit error rate performance of walk-off compensating 1.5/1.3 $\mu$m wavelength converter" ELECTRONICS LETTERS, 3 août. 1995, UK, vol. 31, no. 16, pages 1380-1381 décrit un NOLM utilisé comme un convertisseur de longueurs d'onde dans le domaine de la communication optique. La boucle du NOLM est divisée tour à tour en quinze tronçons de fibre optique monomode et à dispersion décalée. Non seulement le signal d'entrée mais aussi le signal de contrôle sont soumis à un contrôle de polarisation.

L'invention a pour but de pallier les problèmes et les inconvénients de l'art antérieur.

A ces fins, l'invention propose un miroir non-linéaire en boucle (NOLM), ledit NOLM comprenant une boucle de fibre optique (L), ladite boucle (L) ayant une entrée signal pour l'injection d'un premier signal optique caractérisé en partie par une première longueur d'onde ($\lambda_S$) et une sortie signal et un premier coupleur optique (C1) d'entrée / sortie signal ayant un coefficient de couplage de $\xi/(1-\xi)$ pour coupler ladite entrée et ladite sortie à ladite boucle (L), ledit NOLM comprenant en outre une première entrée contrôle via la fibre F3 et un deuxième coupleur optique (C2) pour coupler ladite première entrée contrôle à ladite boucle L afin de permettre l'injection d'un deuxième signal optique dit de contrôle caractérisé en partie par une deuxième longueur d'onde ($\lambda_C$) dans ladite boucle (L) via la fibre $F_3$, ladite boucle de fibre optique (L) comprenant un nombre paire (2i>2, i entier) de tronçons <T1,T2,T3, T4 ...) de fibre à maintien de polarisation ayant deux axes neutres de propagation, ces tronçons étant de longueurs optiques équivalentes et reliés optiquement entre eux par 2i-1 épissures (E1,E2,E3,...) en 2i-1 endroits, lesdites axes neutres de propagation de la fibre étant tournées de 90° à toutes les épissures sauf celle du milieu de la boucle (la i$^{\text{éme}}$) (E1,E3), et la i$^{\text{ème}}$ épissure comprenant un convertisseur de modes, caractérisé en ce que ledit convertisseur de modes comprend un démultiplexeur (C3) et un multiplexeur (C4) optiques à maintien de polarisation, ainsi qu'un premier et un deuxième chemins optiques (F$\lambda_S$, F$\lambda_C$) les connectant pour véhiculer respectivement lesdites première et deuxième longueurs d'onde ($\lambda_S$, $\lambda_C$), lesdits chemins optiques étant en fibre à maintien de polarisation, et en ce que les axes neutres dudit deuxième chemin (F$\lambda_C$) sont tournées de 90°, tandis que les axes neutres dudit premier chemin (F$\lambda_S$) ne sont pas tournées.

Selon une réalisation particulière, lesdits démultiplexeur et multiplexeur optiques sont des coupleurs optiques à maintien de polarisation et sélectifs en longueur d'onde (C3,C4) qui sépare et combine, lesdits premier et deuxième signaux optiques ayant lesdites première et deuxième longueurs d'onde ($\lambda_S$, $\lambda_C$).

Selon une variante, les tronçons sont au nombre de quatre, et les épissures sont au nombre de trois.

Selon une réalisation préférée, les longueurs (L1,L2,L3,L4,...) desdits 2i tronçons (T1,T2,T3,T4,...) de fibre à maintien de polarisation sont choisies de telle sorte que le déphasage nonlinéaire induit par le contrôle sur l'un des axes neutres et intégré sur les i premiers tronçons (la première moitié de la boucle, T1,T2), est égale au déphasage nonlinéaire induit par le contrôle sur l'autre axe et intégré sur les i derniers tronçons (la deuxième moitié de la boucle, T3,T4).

Le NOLM de l'invention peut être avantageusement agencé en vue des applications connues, mais dont les performances ont été jusqu'ici compromises par la sensibilité à la polarisation des dispositifs NOLM de l'art antérieur. Ainsi, l'invention propose également :

. Un dispositif convertisseur de longueur d'onde optique comprenant un NOLM selon l'invention ;
. Un dispositif commutateur optique comprenant un NOLM selon l'invention ;
. Un dispositif modulateur optique pour un laser à fibre en boucle comprenant un NOLM selon l'invention ;
. Un dispositif de régénération de solitons optiques par correction de gigue temporelle, comprenant un NOLM selon l'invention.

L'invention sera mieux comprise, avec ses différentes caractéristiques et avantages, à la lumière de la description détaillée qui suit, avec ses dessins annexés, dont :

- la figure 1, déjà décrite, qui montre schématiquement un exemple d'un miroir non linéaire optique (NOLM) connu de l'art antérieur ;
- la figure 2, déjà décrite, qui montre schématiquement un commutateur NOLM insensible à la polarisation du signal à commuter, tel que connu de l'art antérieur par le document D3 ;
- la figure 3, qui montre schématiquement un convertisseur de longueur d'onde NOLM insensible à la polarisation du signal de contrôle, tel que connu de l'art antérieur par le document D4 ;
- la figure 4, qui montre schématiquement un exemple d'une réalisation selon l'invention d'un NOLM insensible à la polarisation des signaux présentés sur ses deux entrées signal et contrôle ;
- la figure 5, qui montre schématiquement un exemple d'un dispositif convertisseur de modes apte à être utilisé dans la réalisation de la figure 4.

Les dessins sont donnés à titre d'exemples non limitatifs, dans le but d'illustrer les principes de l'invention. Sur toutes les figures, les mêmes repères se réfèrent aux mêmes éléments, et l'échelle n'est pas toujours respectée pour des raisons de clarté.

La figure 3 montre schématiquement un exemple d'un miroir non linéaire optique (NOLM) apte à être utilisé comme un convertisseur de longueurs d'ondes, tel que décrit dans le document D3. La structure mécanique du dispositif de la figure 3 est identique à celle décrit ci-dessus en référence à la figure 2. Seules les polarisations des signaux injectés dans la boucle L sont inversées par rapport à celles de la figure 2. En effet, le NOLM de la figure 3 est insensible à la polarisation du signal de la lumière de pompe ($\lambda_C$) injectée dans la boucle via le coupleur optique C2, à condition que la lumière du signal d'horloge ($\lambda_S$) soit polarisée selon une direction orientée à 45° par rapport aux axes neutres de propagation des fibres à maintien de polarisation de la boucle L.

Les NOLM tels que décrits jusqu'à maintenant sont conformes à ceux de l'art antérieur, qui ne peuvent simultanément être insensible aux polarisations des deux signaux optiques injectés sur les deux coupleurs optiques du NOLM (C1, C2), et compenser la dispersion de polarisation sur la boucle.

Il est un but de l'invention de pallier les inconvénients de l'art antérieur et notamment de permettre le NOLM à être insensible aux polarisations des deux signaux optiques injectés sur les deux coupleurs optiques du NOLM (C1, C2), et de compenser la dispersion de polarisation sur la boucle. Il est un autre objet de l'invention de réaliser un NOLM dont ces qualités peuvent être obtenues simultanément avec des composants plus faciles à réaliser industriellement que ceux enseignés dans l'art antérieur, et encore qui sont relativement insensibles aux variations de température environnante.

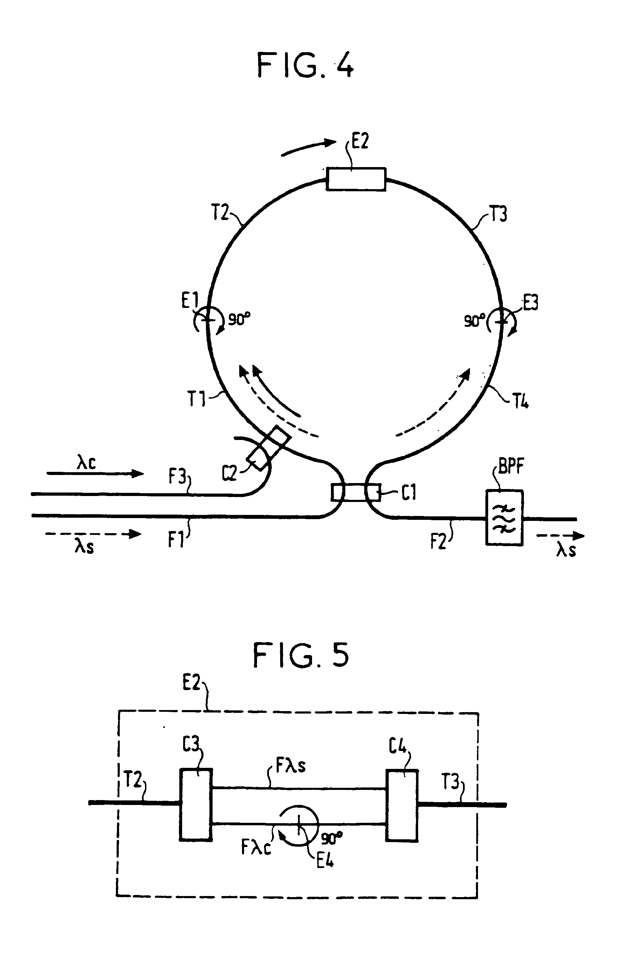

Le fonctionnement du NOLM de l'invention, dont un exemple est montré schématiquement sur la figure 4, est identique à celui des NOLM décrits ci-dessus à l'aide des figures 1, 2, et 3. Tout comme les NOLM des figures 2 et 3, le NOLM de l'invention est réalisé à partir d'une pluralité de tronçons de fibre à maintien de polarisation. Selon l'invention, le nombre de tronçons est un nombre pair 2i, avec i entier et supérieur à 1. Conformément à la figure 4, il faut un minimum de quatre tronçons (T1,T2,T3,T4) de longueurs optiques équivalentes (respectivement (L1,L2,L3,L4). Ces quatre tronçons (T1,T2,T3,T4) sont reliés optiquement entre eux par trois épissures (E1,E2,E3) en trois endroits. Aux premier et troisième épissures (E1 , E3), les axes neutres de propagation de la fibre à maintien de polarisation sont tournées de 90° comme expliqué ci-dessus avec référence à l'unique épissure de la figure 2.

Selon l'invention, à la deuxième épissure E2 entre les tronçons T2 et T3, il est inséré dans la boucle L un convertisseur de modes tel que montré sur la figure 5, qui comprend un démultiplexeur C3 et un multiplexeur C4 optiques, ainsi que deux chemins optiques (F$\lambda_S$ et F$\lambda_C$) à maintien de polarisation les connectant. Le démultiplexeur C3 divise les deux signaux optiques présentés sur son entrée ($\lambda_S$, $\lambda_C$) respectivement sur lesdits deux chemins (F$\lambda_s$, F$\lambda_C$). Sur le chemin (F$\lambda_C$) véhiculant le signal contrôle ($\lambda_C$), il est effectué une épissure E4 avec rotation de 90° des axes neutres de propagation de la fibre à maintien de polarisation. Sur l'autre chemin (F$\lambda_S$), il n'y a pas de rotation des axes. Ledit multiplexeur C4 recombine ensuite les deux signaux ($\lambda_S$ et $\lambda_C$).

De tels dispositifs démultiplexeur (C3) et multiplexeur (C4) peuvent être réalisés par exemple avec trois fibres à maintien de polarisation, avec un filtre dichröique et un coupleur optique à maintien de polarisation. Un tel dispositif est disponible commercialement auprès de la société canadienne JDS FITEL Inc., Nepean, Ontario sous le numéro de catalogue WD1555-ALL5JM1, par exemple. Il est également possible que, dans un avenir proche, un tel composant puisse être réalisé en technologie d'optique intégré.

On n'a plus besoin de s'arranger pour injecter le signal optique de contrôle ($\lambda_C$) dans le NOLM via le coupleur C2 avec son axe de polarisation orienté à 45° par rapport aux axes A1, A2 de maintien dans la fibre de boucle L. Le fonctionnement du dispositif est ainsi insensible à la polarisation des deux signaux ($\lambda_S$ et $\lambda_C$), ce qui constitue un avantage majeur par rapport aux réalisations de l'art antérieur décrites dans les documents D1, D2, D3, et D4.

Par rapport au dispositif du document D5, la réalisation est considérablement simplifiée, car les longueurs des deux chemins optiques (F$\lambda_S$, F$\lambda_C$) ne sont pas critiques comme l'est la longueur du convertisseur de modes de D5. De plus, le convertisseur de modes de l'invention est relativement insensible à la température environnante, tandis que le dispositif de D5 requiert une régulation de température pour fonctionner correctement. D'autre part, le NOLM de D5 ne compense pas la dispersion de la polarisation des signaux se propageant sur la boucle L.

Ainsi, le NOLM de l'invention pourra fonctionner correctement et de manière reproductible avec des signaux ($\lambda_s$, $\lambda_c$) de polarisations arbitraires, inconnues, et éventuellement ne pouvant être maîtrisées. D'autre part, la compensation de la dispersion de polarisation est effectuée automatiquement et sans réglages.

Pour décrire plus précisément un mode de réalisation préférée de l'invention, il convient de décrire ce qui veut dire, dans le présent contexte, des longueurs optiques équivalentes des tronçons (T1,T2,T3,T4). Pour cela, il faut tenir compte des pertes optiques subies par les signaux optiques se propageant dans les tronçons de la boucle L et à travers les épissures les reliant, car l'indépendance à la polarisation dépend de l'égalité des déphasages non-linéaires (effet Kerr) avant et après le convertisseur de modes, et donc de l'amplitude des signaux.

Pour donner un exemple du calcul des longueurs de tronçons, on fera quelques hypothèses pour simplifier l'exposé. On choisit le nombre pair de tronçons 2i = 4. Au sein de chaque paire de tronçons, les longueurs seront choisies identiques (L1=L2, L3=L4) pour compenser la dispersion de polarisation au sein de chaque paire. Tel que montré sur la figure 4, le coupleur optique C2 est disposé près du début du premier tronçon T1. Un signal contrôle injecté via ce coupleur C2 subira successivement les pertes dans T1, E1, T2, E2, T3, E3, T4. Ce signal sera le plus faible dans le dernier tronçon T4, et les effets non-linéaires seront également les plus faibles dans ce tronçon. Pour obtenir des effets de même grandeur dans le dernier tronçon T4 que dans le premier T1, il faut donc que la longueur L4 du dernier tronçon T4 soit plus grande que la longueur L1 du premier tronçon T1.

On prends une valeur de l'atténuation de fibre constante pour tous les tronçons, fixée par exemple à $\alpha$ = 0.23 dB/km, et les pertes des épissures E1, E2, E3 sont notées respectivement P1, P2, P3.

En prenant la condition que le déphasage nonlinéaire induit par le contrôle sur l'un des axes neutres et intégré sur les i premiers tronçons (la première moitié de la boucle, T1,T2), est égale au déphasage nonlinéaire induit par le contrôle sur l'autre axe et intégré sur les i derniers tronçons (la deuxième moitié de la boucle, T3,T4), nous pouvons écrire :

$$(1-e^{-\alpha L1})/\alpha + (P1.e^{-\alpha L1}).(1-e^{-\alpha L1})/\alpha =$$

$$P1.P2.(e^{-2\alpha L1})(1-e^{-\alpha L4})/\alpha + P1.P2.P3.[e^{-\alpha(2L1+L4)}][1-e^{-\alpha L4}]/\alpha$$

Nous obtenons le résultat que L1 et L4 doivent vérifier la relation :

$$1+(P1-1)e^{-\alpha L1} + P1.e^{-2\alpha L1} =$$

$$[P1.P2.e^{-2\alpha L1}] [1 + (P3-1)e^{-\alpha L4} + P3.e^{-2\alpha L4})]$$

Les pertes d'insertion dans le convertisseur de modes d'un chemin optique sans rotation des axes de polarisation sont négligeables par rapport aux termes retenus dans les équations ci-dessus.

Le NOLM de l'invention peut comprendre un plus grand nombre (pair) de tronçons, mais ceci augmente la complexité du dispositif, ainsi que les pertes dues aux épissures.

L'homme de l'art saura décliner ce concept pour l'adapter à des multiples applications via des diverses réalisations, sans sortir pour autant du cadre de la présente invention, telle que défini par les revendications qui suivent.

**Revendications**

1. Miroir non-linéaire en boucle ledit miroir non-linéaire en boucle comprenant une boucle de fibre optique (L), ladite boucle (L) ayant une entrée signal pour l'injection d'un premier signal optique **caractérisé en** partie par une première longueur d'onde $\lambda_S$ et une sortie signal et un premier coupleur optique (C1) ayant un coefficient de couplage pour coupler ladite entrée et ladite sortie à ladite boucle (L), ledit miroir non-linéaire en boucle comprenant en outre une première entrée contrôle via une 2i, avec i entier et supérieur à 1, (F3) et un deuxième coupleur optique (C2) pour coupler ladite première entrée contrôle à ladite boucle L afin de permettre l'injection d'un deuxième signal optique dit de contrôle **caractérisé en** partie par une deuxième longueur d' onde $\lambda_C$ dans ladite boucle (L) via la 2i, avec i entier et supérieur à 1, (F3), ladite boucle de fibre optique (L) comprenant un nombre pair fibre optique de contrôle de tronçons (T1,T2,T3,T4,...) de fibre à maintien de polarisation ayant deux axes neutres de propagation (A1,A2), ces tronçons étant de longueurs optiques équivalentes et reliés optiquement entre eux par 2i-1 épissures (E1,E2,E3,...) en 2i-1 endroits, lesdits axes neutres de propagation de la fibre étant tournées de.90° aux 2i-2 épissures sauf celle du milieu de la boucle (E1,E3), et la i[ème] épissure comprenant un convertisseur de modes, **caractérisé en ce que** ledit convertisseur de modes comprend un démultiplexeur (C3) et un multiplexeur (C4) optiques à maintien de polarisation et, ainsi qu'un premier et un deuxième chemins optiques (F$\lambda_S$, F$\lambda_C$) les connectant pour véhiculer respectivement lesdites première et deuxième longueurs d'onde, lesdits chemins optiques (F$\lambda_S$, F$\lambda_c$) étant en fibre à maintien de polarisation, **et en ce que** les axes neutres (A1,A2) dudit deuxième chemin (F$\lambda_C$) sont tournés de 90°, tandis que les axes neutres dudit premier chemin (F$\lambda_S$) ne sont pas tournés.

**2.** Miroir non-linéaire en boucle selon la revendication 1, dans lequel lesdits démultiplexeur et multiplexeur optiques (C3,C4) sont des coupleurs optiques à maintien de polarisation et sélectifs en longueur d'onde qui sépare et combine lesdits premier et deuxième signaux optiques ayant lesdites première et deuxième longueurs d'onde

**3.** Miroir non-linéaire en boucle selon l'une quelconque des revendications 1 ou 2, dans lequel lesdits tronçons (T1,T2,T3,T4,...) de fibre à maintien de polarisation sont au nombre de quatre, et lesdites épissures sont au nombre de trois (E1,E2,E3).

**4.** Miroir non-linéaire en boucle selon la revendication 3, dans lequel les longueurs (L1, L2, L3, L4) desdits quatre tronçons (T1,T2,T3,T4) de fibre à maintien de polarisation sont choisies de telle sorte que le déphasage nonlinéaire induit par le contrôle sur l'un des axes neutres et intégré sur les i premiers tronçons formant la première moitié de la boucle (T1,T2), est égale au déphasage nonlinéaire induit par le contrôle sur l'autre axe et intégré sur les i derniers tronçons formant la deuxième moitié de la boucle (T3,T4).

**5.** Convertisseur de longueur d'onde optique comprenant un miroir non-linéaire en boucle selon l'une quelconque des revendications précédentes.

**6.** Commutateur optique comprenant un miroir non-linéaire en boucle selon l'une quelconque des revendications précédentes.

**7.** Modulateur optique pour un laser à fibre en boucle comprenant un miroir non-linéaire en boucle selon l'une quelconque des revendications précédentes.

**8.** Dispositif de régénération de solitons optiques par correction de gigue temporelle, comprenant un miroir non-linéaire en boucle selon l'une quelconque des revendications précédentes.

**Claims**

**1.** , A non-linear optical loop mirror, said non-linear optical loop mirror comprising art optical fiber loop (L), said loop (L) having a signal output and a signal input for injecting a first optical signal **characterized in** part by a first wavelength $\lambda_S$ and a first optical coupler (C1) with a coupling coefficient for coupling said input and said output to said loop (L), said non-linear optical loop mirror also having a first control input via a control optical fiber (F3) and a second optical coupler (C2) for coupling said first control input to said loop (L) to enable a "control" second optical signal **characterized in** part by a second wavelength $\lambda_C$ to be injected into said loop (L) via the control optical fiber (F3), said optical fiber loop (L) having an even number 2i, where i is an integer greater than 1, of segments (T1, T2, T3, T4, ...) of polarization-maintaining fiber having two neutral propagation axes (A1, A2), said segments having equivalent optical lengths and being optically interconnected via 2i-1 splices (E1, E2, E3, ...) at 2i-1 locations, said neutral propagation axes of the fiber being turned through 90° at the 2i-2 spaces (E1, E3) other than the splice in the middle of the loop, with the i-th splice (E2) including a mode converter, **characterized in that** said mode converter comprises an optical polarization-maintaining demultiplexer (C3) and an optical polarization-maintaining multiplexer (C4) together with first and second optical paths (F$\lambda_S$, F$\lambda_C$) interconnecting them for conveying said first and second wavelengths respectively, said optical paths (F$\lambda_S$ and F$\lambda_C$) being implemented by polarization-maintaining fiber, and **in that** the neutral axes (A1, A2) of said second path (F$\lambda_C$) are turned through 90° while the neutral axes of said first path (F$\lambda_S$) are not turned.

**2.** A non-linear optical loop mirror according to claim 1, in which said optical demultiplexer and multiplexer (C3, C4) are polarization-maintaining optical couplers that are wavelength-selective to separate and combine said first and second optical signals having said first and second wavelengths.

**3.** A nonlinear optical loop mirror according to claim 1 or 2, in which said polarization-maintaining fiber segments (T1, T2, T3, T4,...) are four in number and said splices (E1, E2, E3) are three in number.

**4.** A non-linear optical loop mirror according to claim 3, in which the lengths (L1, L2, L3, L4) of said four polarization-maintaining fiber segments (T1, T2, T3, T4) are selected so that the non-linear phase shift induced by control on one of the neutral axes and integrated over the first segments forming the first half of the loop, (T1, T2), is equal to the non-linear phase shift induced by the control on the other axis and integrated over the i last segments forming the second half of the loop, (T3, T4).

**5.** An optical wavelength converter including a non-linear optical loop mirror according to any preceding claim.

**6.** An optical switch including a non-linear optical loop mirror according to any preceding claim,

**7.** An optical modulator for a loop fiber laser including a non-linear optical loop mirror according to any preceding claim.

**8.** An optical soliton regenerator that performs time jitter correction, including a non-linear optical loop mirror according to any preceding claim.

**Patentansprüche**

**1.** Nichtlinearer Ringspiegel, wobei dieser nichtlineare Ringspiegel eine Schleife aus optischer Faser (L) enthält, diese Schleife (L) einen Signaleingang für die Injektion eines ersten optischen Signals hat, zum Teil **gekennzeichnet durch** eine erste Wellenlänge $\lambda_s$ und einen Signalausgang und einen Optokoppler (C1) mit einem Kopplungskoeffizienten, um diesen Eingang und diesen Ausgang an diese Schleife (L) zu koppeln, wobei dieser nichtlineare Ringspiegel außerdem einen ersten Steuereingang über eine Steuer-Optikfaser (F3) und einen zweiten Optokoppler (C2) enthält, um diesen ersten Steuereingang an diese Schleife L zu koppeln, um die Injektion eines zweiten optischen Signals, des so genannten Steuersignals zu ermöglichen, zum Teil **gekennzeichnet durch** eine zweite Wellenlänge $\lambda_c$ in dieser Schleife (L) über die Steuer-Optikfaser (F3), wobei diese Schleife aus optischer Faser (L) eine gerade Anzahl 2i, mit i ganze Zahl und größer als 1, von Abschnitten (T1, T2, T3, T4) Faser mit Polarisationsaufrechterhaltung enthält, die zwei neutral Ausbreitungsachsen (A1, A2) hat, wobei diese Abschnitte von äquivalenter optischer Länge sind und optisch untereinander **durch** 2i- 1 Spleißstellen (E1, E2, E3, ...) an 2i-1 Stellen verbunden sind, wobei diese neutralen Ausbreitungsachsen der Faser an den 2i-2 Spleißstellen, außer derjenigen in der Mitte der Schleife (E1, E3), um 90° gedreht sind, und die i.te Spleißstelle einen Modenwandler enthält, **dadurch gekennzeichnet, dass** dieser Modenwandler einen optischen Demultiplexer (C3) und einen optischen Multiplexer (C4) mit Polarisationsaufrechterhaltung beinhaltet, sowie einen ersten und einen zweiten sie verbindenden Lichtweg (F $\lambda_s$, F$\lambda_c$), um diese erste beziehungsweise diese zweite Wellenlänge ($\lambda_s$, $\lambda_c$) zu transportieren, wobei diese Lichtwege (F $\lambda_s$F $\lambda_c$) aus Faser mit Polarisationsaufrechterhaltung sind, und **dadurch gekennzeichnet, dass** die neutralen Achsen (A1, A2) dieses zweiten Wegs (F $\lambda_c$) um 90° gedreht sind, während die neutralen Achsen dieses ersten Wegs (F $\lambda_s$) nicht gedreht sind.

**2.** Nichtlinearer Ringspiegel gemäß Anspruch 1 bei dem dieser optische Demultiplexer und dieser optische Multiplexer (C3, C4) Optokoppler mit Polarisationsaufrechterhaltung und wellenlängenselektiv sind, welche, dieses ersten und zweite optischen Signale trennen und kombinieren, die diese erste und zweite Wellenlänge haben.

**3.** Nichtlinearer Ringspiegel gemäß Anspruch 1 oder 2, bei dem diese Abschnitte Faser mit Polarisationsaufrechterhaltung (T1, T2, T3, T4,...) vier an der Zahl und diese Spleißstellen (E1, E2, E3) drei an der Zahl sind.

**4.** Nichtlinearer Ringspiegel gemäß Anspruch 3, bei dem die Längen (L1, L2, L3, L4,) dieser vier Abschnitte (T1 ,T2, T3, T4) Faser mit Polarisationsaufrechterhaltung so gewählt werden, dass die nichtlineare Phasenverschiebung, die durch die Steuerung an einer der neutralen Achsen induziert und auf den i ersten Abschnitten, welche die erste Hälfte der Schleife (T1, T2) bilden, integriert wird, gleich der nichtlinearen Phasenverschiebung ist, die durch die Steuerung an der anderen Achse induziert und auf den i letzten Abschnitten, welche die zweite Hälfte der Schleife (T3, T4) bilden, integriert wird.

**5.** Optischer Wellenlängenwandler, der einen nichtlinearen Ringspiegel gemäß einem der vorstehenden Ansprüche enthält.

**6.** Optischer Schalter, der einen nichtlinearen Ringspiegel gemäß einem der vorstehenden Ansprüche enthält.

**7.** Optischer Modulator für einen Laser mit Ringfaser, der einen nichtlinearen Ringspiegel gemäß einem der vorstehenden Ansprüche enthält.

**8.** Vorrichtung zur Regeneration optischer Solitonen durch Korrektur von zeitlichem Jitter, die einen nichtlinearen Ringspiegel gemäß einem der vorstehenden Ansprüche enthält.

# FIG. 1

# FIG. 2

# FIG. 3

# FIG. 4

# FIG. 5